# EUROPÄISCHE PATENTSCHRIFT

(11) **EP 0 963 331 B1**
(45) Veröffentlichungstag und Bekanntmachung des Hinweises auf die Patenterteilung: **16.01.2002**
(21) Anmeldenummer: 98903941.7
(22) Anmeldetag: 23.02.1998
(51) Int. Cl.: B65G 1/02

(54) **WECHSELMAGAZIN FÜR STÜCKGUT**
REPLACEMENT MAGAZINE FOR ITEMS
MAGASIN REMPLACABLE POUR ARTICLES

(30) Priorität: 27.02.1997 AT 34097
(43) Veröffentlichungstag der Anmeldung: 15.12.1999
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT)
(74) Vertreter: Weinzinger, Arnulf, Dipl.-Ing.
(86) Internationale Anmeldenummer: AT9800037
(87) Internationale Veröffentlichungsnummer: WO9838119

(56) Entgegenhaltungen:
- EP-A- 0 165 918
- DE-A- 4 225 041
- US-A- 2 272 682
- US-A- 3 409 110

## Beschreibung

Die Erfindung betrifft ein Wechselmagazin gemäß dem einleitenden Teil von Anspruch 1.

Ein Wechselmagazin dieser Art in Form eines Schachtes ist aus der DE 42 25 041 A1 bekannt. Dieses Magazin wird bei Kommissionieranlagen verwendet und ist zur Speicherung gleichartiger Stückgüter, wie Tonträger, Bücher, Kisten oder dergl. vorgesehen bzw. auf deren Dimensionen abgestimmt. Für von den Dimensionen her unterschiedliche Stückgüter muß demnach jeweils ein spezifisches Magazin verwendet werden, wodurch in nachteiliger Weise eine entsprechende Anzahl an unterschiedlichen Magazinen erforderlich ist bzw. auf Lager gehalten werden muß.

Die US 3 409 110 A offenbart einen Verkaufsautomaten, bei dem vertikale Teilerwände, die aufrechte Warenfächer definieren, von Schienen getragen werden. Jede Wand weist hakenartige Teile auf, die mit Nuten der Schienen selektiv in Eingriff kommen, so daß die Wände entlang den Schienen entsprechend der Abmessung der Ware verschoben werden können.

Die US 2 272 682 A beschreibt ebenfalls einen Verkaufsautomaten, dessen Wandplatten verstellbar in der Vorrichtung angeordnet sind. Dies wird einerseits durch an den Seitenwandplatten angebrachte Klemmschrauben, die in Schlitzen von Schienen in der Waagrechten verschiebbar sind, und andererseits durch an den hinteren Wandplatten schwenkbar angebrachte Hebel, die die hintere bewegbare Wandplatte von einer unbewegbaren hinteren Wand wegdrücken, bewerkstelligt.

In der EP 0 165 918 A ist eine Vorrichtung zur automatischen Ausgabe von Waren geoffenbart, wobei die Seitenwände mittels daran festgeschraubter Zwischenschienen im Abstand voneinander gehalten werden. Die Länge der Zwischenschienen wird entsprechend der Breite der Waren gewählt.

Die drei letztgenannten Schriften beziehen sich im Einzelnen auf Verkaufsautomaten zum Verkauf von Stückgütern (z.B. Zigarettenpackungen) bzw. auf Speicherregale selbst, nicht aber auf ein Wechselmagazin.

Aufgabe der Erfindung ist die Schaffung eines Wechselmagazins der eingangs genannten Art, welches an die Dimensionen unterschiedlicher Stückgüter rasch und einfach angepaßt werden kann.

Zur Lösung dieser Aufgabe sieht die Erfindung ein Wechselmagazin mit den in Anspruch 1 definierten Merkmalen vor; vorteilhafte Ausgestaltungen und Weiterbildungen sind in den Unteransprüchen angegeben.

Mit der erfindungsgemäßen Ausbildung kann das Magazin rasch den Dimensionen des Stückgutes angepaßt werden. Es ist somit in vorteilhafter Weise auch möglich, daß das Stückgut bereits beim Hersteller in die Magazine eingefüllt wird und die gefüllten Magazine anschließend versandt oder jederzeit abrufbereit gelagert werden können, wobei nur eine geringe Anzahl von verschieden großen Magazinen (z.B. nur zwei verschiedene Größen) erforderlich ist. Dabei ist es auch möglich, die Höhe der durch die Führungsleiste gebildeten Ausgabeöffnung für das unterste Stückgut durch die versetzbare Führungsleiste rasch festzulegen bzw. an die Höhe des Stückgutes anzupassen.

Eine besonders zweckmäßige und einfache Verbindung zwischen den Seitenwänden besteht darin, daß die Stege zumindest mit einer Seitenwand lösbar verbunden sind. Hierdurch wird auch ein rascher Zusammenbau des Magazins ermöglicht.

Zur Anpassung des Magazins an die Breite des Stückgutes besteht eine vorteilhafte Ausbildung darin, daß die Stege zur Erzielung unterschiedlicher Längen quer zu ihrer Längsrichtung Sollbruchstellen aufweisen, wodurch eine gezielte Ablängung der Stege auf ein vorgegebenes Maß ermöglicht wird.

Eine besonders günstige, stabile, bruchfeste Ausbildung der Stege kann dadurch erzielt werden, daß die Stege aus einem glasfaserverstärkten Kunststoffmaterial bestehen; vorzugsweise weisen dabei die Stege an zumindest einer ihrer Flachseiten V-förmige Kerben als Sollbruchstellen auf, so daß dann nichtsdestoweniger ohne Zuhilfenahme eines Werkzeugs eine Ablängung der Stege durch einfaches Abbrechen erfolgen kann.

Zur stabilen Verbindung der Stege mit den Seitenwänden ist vorzugsweise vorgesehen, daß die Stege Vertiefungen aufweisen, welche mit korrespondierenden Vorsprüngen an den Seitenwänden formschlüssig verbindbar sind.

Dabei hat es sich als besonders zweckmäßig erwiesen, wenn die Vorsprünge innerhalb von Hohlprofilen an den Seitenwänden ausgebildet sind, in welchen die Stege einsetz- und fixierbar sind, und wenn die Stege im Hohlprofil mittels eines Keiles fixierbar sind. Durch diese Ausbildung wird ein formstabiler Aufbau des Magazins erzielt.

Um eine rasche Anpassung des Magazins an die Tiefe des Stückgutes vornehmen zu können, ist es von Vorteil, wenn die Führungsschiene über Schnappverbindungen mit der (jeweiligen) Seitenwand verbunden ist.

Hierbei besteht eine vorteilhafte Ausbildung darin, daß als Schnappverbindungen an der Führungsschiene angebrachte Zapfen vorgesehen sind, die in jeweils eine Vertiefung mehrerer Reihen von korrespondierenden Vertiefungen in der Seitenwand einschnappbar sind. Durch diese versenkte Anordnung der Vertiefungen in der Seitenwand besteht keine Gefahr, daß die Verpackung des Stückgutes oder das Stückgut selbst durch vorstehende Teile beschädigt wird.

Eine baulich einfache und zweckmäßige Anordnung der Vertiefungen kann dadurch erzielt werden, daß die Vertiefungen in Leisten ausgebildet sind, welche in Durchbrechungen der Seitenwand angeordnet sind.

Um die Führungsschiene in der Lage quer zu den Seitenwänden zu sichern, ist es auch von Vorteil, wenn die Zapfen einen in Längsrichtung der Führungsschiene verbreiterten Kopf aufweisen.

In weiterer Ausgestaltung des Magazins ist vorgesehen, daß die Führungsleiste innerhalb der Führungsschiene in der jeweiligen Position formschlüssig gehalten ist, wodurch eine in ihrer Höhe genau definierte Ausgangsöffnung für das unterste Stückgut geschaffen wird.

Gemäß einer bevorzugten Ausführungsform ist hierbei vorgesehen, daß die Führungsschiene im Querschnitt allgemein C-förmig ausgebildet ist und zwischen ihren Schenkeln einen Querträger aufweist, an welchem die Führungsleiste anliegt und welcher Bohrungen aufweist, um einen oder mehrere Stift (e) aufzunehmen, der bzw. die federnd an der Führungsleiste angebracht ist bzw. sind, wodurch die Führungsleiste formschlüssig innerhalb der Führungsschiene verschiebbar gehalten und fixierbar ist.

Besonders zweckmäßig ist in diesem Zusammenhang, wenn die Führungsleiste eine Durchbrechung aufweist, in welcher eine federnde Zunge angeordnet ist, welche den oder die Stift(e) trägt, so daß die Verbindung zwischen der Führungsschiene und der Führungsleiste von Hand aus gelöst werden kann, indem die federnde Zunge zurückgebogen wird.

Es hat sich auch als besonders günstig erwiesen, wenn die Führungsleiste an ihrem unteren Ende unter Bildung einer Einlaufschräge abgewinkelt ist. Hierdurch wird das oberste Stückgut beim Ausschieben aus dem Magazin besonders sanft in Richtung zur Ausgabe ausgerichtet, falls seine vordere Stirnseite hochstehen sollte.

Von Vorteil ist es auch, wenn am unteren Ende der Führungsleiste Borstenbündel angebracht sind. Damit kann verhindert werden, daß das Stückgut von selbst aus dem Magazin herausrutscht, insbesondere dann, wenn nur mehr wenige Stückgüter im Magazin enthalten sind.

Zur zusätzlichen Anpassung des Magazins an die Breite des Stückgutes ist mit Vorteil vorgesehen, daß an der Seitenwand eine parallel zur Führungsschiene verlaufende Gleitschiene im Bereich der Rückseite des Magazins lösbar an der Seitenwand angebracht ist. Hierdurch bietet sich die Möglichkeit, entweder in jeder Seitenwand eine Gleitschiene, oder nur in einer Seitenwand, oder keine Gleitschiene, vorzusehen.

Zur weiteren Anpassung des Magazins an die Tiefe des Stückgutes ist es auch günstig, wenn an der Rückseite des Magazins ein Justierhebel schwenkbar auf einer Welle gelagert und in seiner Lage fixierbar ist.

Um die Handhabung des Magazins zu erleichtern, ist es auch vorteilhaft, wenn an zumindest einer Seitenwand ein Griff angebracht ist.

Die Erfindung wird nachfolgend an Hand von in der Zeichnung dargestellten, bevorzugten Ausführungsbeispielen, auf die sie jedoch nicht beschränkt sein soll, noch weiter erläutert. Es zeigen:
Fig.1 eine Vorderansicht eines aus zwei Seitenwänden bestehenden auswecheelbaren Magazins, wobei die Seitenwände über Stege verbunden sind;
Fig.2 das Magazin gemäß Fig.1 in einer Seitenansicht gemäß Pfeil II in Fig.1;
Fig.3 das Magazin in einer Ansicht von der anderen Seite, gemäß Pfeil III in Fig.1, teilweise im Schnitt;
Fig.4 einen Schnitt nach der Linie 4-4 in Fig.3;
Fig.5 eine Seitenansicht einer Führungsschiene für das Magazin, teilweise im Schnitt;
Fig.6 einen Schnitt nach der Linie VI-VI in Fig.5;
Fig.7 eine in der Führungsschiene gemäß Fig.6 geführte Führungsleiste im Schnitt;
Fig.8 eine Draufsicht auf die Führungsleiste gemäß Fig.7;
Fig.9 eine Draufsicht auf einen Steg;
Fig.10 eine Seitenansicht eines Steges gemäß Fig.9;
Fig.11 eine Draufsicht auf ein Vorfabrikat eines Steges; und
Fig.12 eine schematische Darstellung eines Regals für eine Kommissionieranlage mit auswechselbaren Magazinen in Seitenansicht.

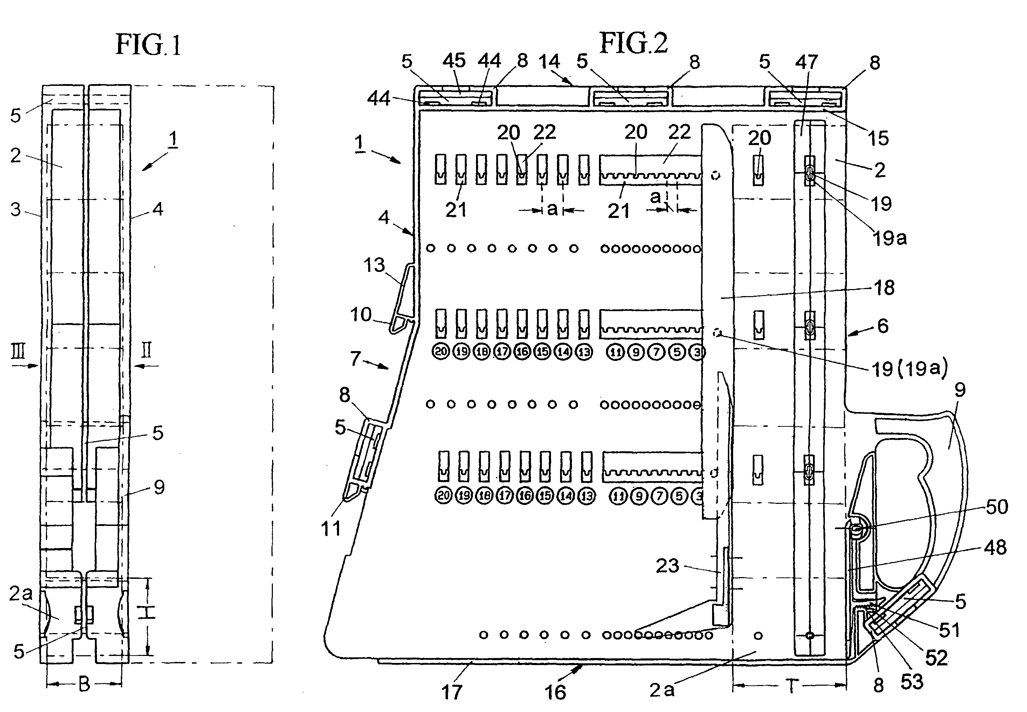

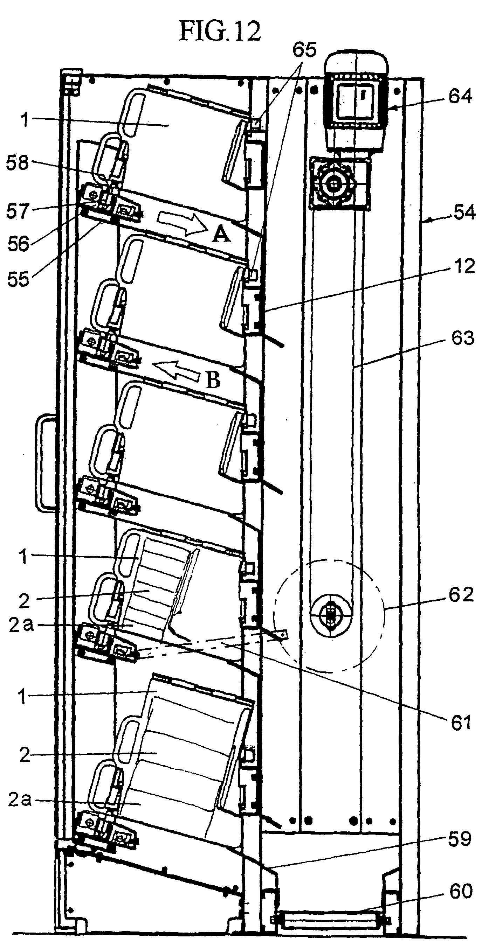

In Fig.1 und 2 bezeichnet 1 allgemein ein derzeit als besonders bevorzugt angesehenes Wechsel-Magazin für Stückgut 2, welches - wie in Fig.1 mit strichpunktierter Linie dargestellt übereinandergestapelt zwischen zwei aus Kunststoffmaterial, vorzugsweise ABS, bestehenden Seitenwänden 3, 4 angeordnet ist, welche über fünf Stege 5 miteinander verbunden sind, wie aus Fig.2 genauer ersichtlich ist, wobei drei Stege 5 an der Oberseite 14 der Seitenwände 3, 4 und jeweils ein Steg 5 an der Rückseite 6 und an der Vorderseite 7 der Seitenwände 3, 4 angeordnet bzw. in Hohlprofilen 8 befestigt sind, wie weiter unten genauer erläutert werden wird. An der in Fig.1 und 2 dargestellten rechten Seitenwand 4 ist an deren Rückseite 6 im unteren Abschnitt ein Griff 9 angeformt, um die Handhabung des Magazins 1 zu erleichtern, wobei im Griff 9 gleichzeitig eines der Hohlprofile 8 zur Aufnahme eines der Stege 5 ausgebildet ist. In Ergänzung dazu kann an der linken Seitenwand 3 an deren Rückseite 6, z.B. im oberen Abschnitt, zusätzlich ein Griff 9 (nicht dargestellt), (s. aber Fig.12) vorgesehen sein.

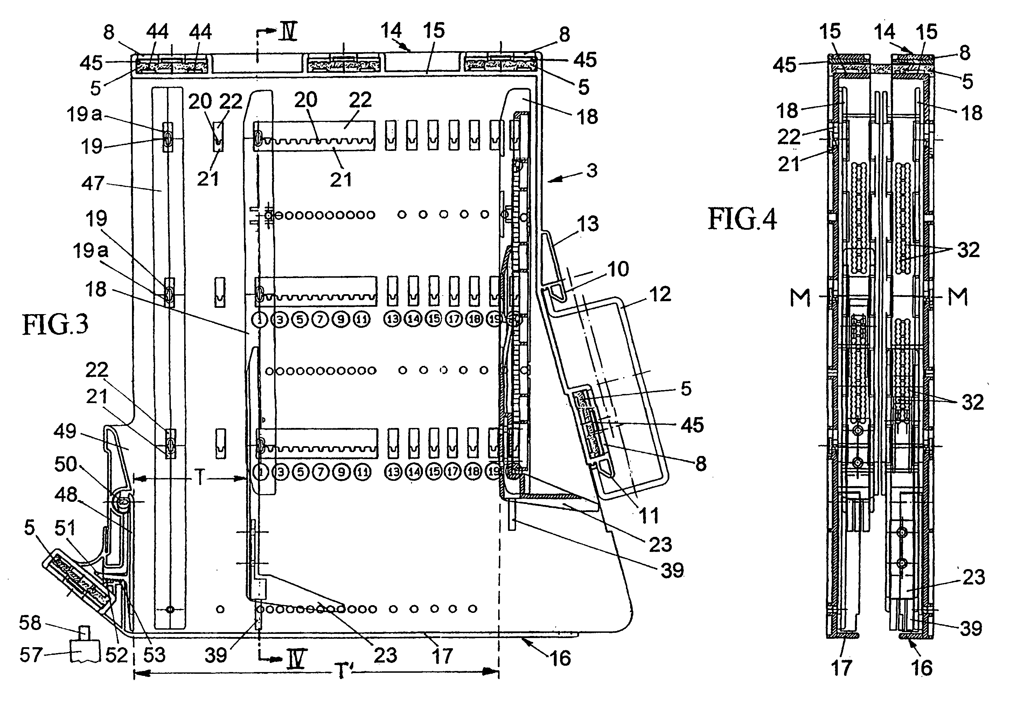

Zur Befestigung des Magazins 9 an einem Regal sind an der Vorderseite 7 der Seitenwände 3, 4 zwei nach unten gerichtete Haken 10, 11 vorgesehen, welche in eine Profilschiene 12 (s. Fig.3) eines Speicherregals eingehängt werden können, wobei der untere Haken 11 am Hohlprofil 8 angeformt ist, während der obere Haken 10 an einem Hohlprofil 13 angeformt ist.

Die drei an der Oberseite 14 des Magazins 1 bzw. der Seitenwände 3, 4 ausgebildeten Hohlprofile 8 sind an einer sich über die gesamte Tiefe der Seitenwände erstreckenden oberen Leiste 15 angeformt, vgl. außer Fig.2 auch Fig.3 und 4, der eine an der Unterseite 16 des Magazins bzw. der Seitenwände 3, 4 angeformte untere Leiste 17 gegenüberliegt, um den Freiraum für das Stückgut 2 nach oben und unten zu begrenzen, wobei die untere Leiste 17 als Auflage für das unterste Stückgut 2a dient.

Durch Verwendung entsprechend langer Stege 5 kann das Magazin 1 verbreitert werden, wie in Fig.1 mit strichpunktierter Linie dargestellt, wodurch eine Anpassung des Magazins 1 an die Breite B des Stückgutes 2 ermöglicht wird.

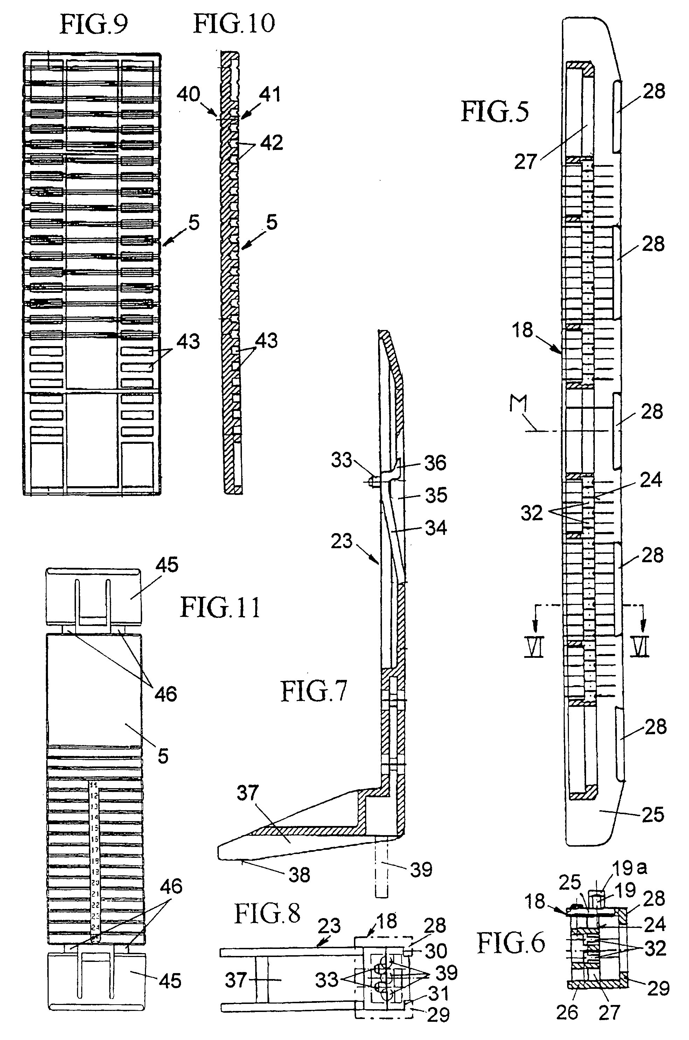

Um auch innerhalb des Magazins 1 eine Halterung für die übereinandergestapelten Stückgüter 2 zu schaffen, die an die jeweilige Tiefe T des Stückgutes anpaßbar ist, sind in jeder Seitenwand 3, 4 parallel zu den Stirnseiten des Stückgutes 2 und den Seitenwänden 3, 4 verlaufende Führungsschienen 18 (s. Fig.2, 3 und 4) vorgesehen, die aus Kunststoffmaterial, z.B. PC, bestehen, und die in Richtung der Tiefe T des Stückgutes 2 versetzbar angeordnet sind, wobei in Fig.3 zum besseren Verständnis zwei Führungsschienen 18 für unterschiedliche Tiefen T bzw. T' entsprechend versetzt dargestellt sind. Zu diesem Zweck sind an einem Seitenschenkel der allgemein im Querschnitt C-förmig ausgebildeten Führungsschiene 18 (s. auch Fig.6) drei Befestigungszapfen 19 angeformt, welche entsprechend in drei Reihen von korrespondierenden Vertiefungen 20 einschnappbar sind, die in den Seitenwänden 3, 4 ausgebildet sind; zur Lagesicherung weisen die Befestigungszapfen 19 einen in Längsrichtung der Führungsschiene 18 verbreiterten Kopf 19a auf. Die Vertiefungen 20 sind in schmalen, gegebenenfalls unterschiedlich langen (s. Fig.2) Leisten 21 ausgeformt, die wiederum innerhalb rechteckförmiger, gegebenenfalls (Fig.2) unterschiedlich langer Durchbrechungen 22 in den Seitenwänden 3, 4 angeformt sind. Auf diese Weise kann die Führungsschiene 18 entsprechend der Tiefe T des Stückgutes 2 an der passenden Stelle im Magazin 1 plaziert werden. Der Abstand a der Vertiefungen 20 voneinander ist gestaffelt und beträgt ca. 5, 10 bzw. 20 mm (s. Fig.2).

Die in den Fig.3 und 4 gezeigte und in den Fig.5 und 6 vergrößert dargestellte allgemein C-förmige Führungsschiene 18 dient des weiteren zur Aufnahme einer in Fig.7 und 8 ebenfalls vergrößert dargestellten Führungsleiste 23, welche - von der Seite gesehen - L-förmig ausgebildet ist. Mittig der Führungsschiene 18 ist eine Auflagefläche 24 für die Führungsleiste 23 ausgebildet, welche von der Oberseite eines die beiden Schenkel 25, 26 der Führungsschiene 18 verbindenen Querträgers 27 geformt wird, wobei die abgewinkelten Endstücke 28, 29 der Schenkel 25, 26 die Führungsleiste 23 jeweils an einer seitlichen Abstufung 30, 31 mit Spiel umgreifen, so daß die Führungsleiste 23 in der Führungsschiene 18 längsverschiebbar ist. Die Endstücke 28, 29 sind hierbei aus Gründen der Materialeinsparung nicht über die gesamte Länge der Führungsleiste 23, sondern nur abschnittsweise in fünf Segmente unterteilt, ausgebildet, wie insbesondere aus Fig.5 ersichtlich ist.

Durch diese Anordnung wird für das unterste Stückgut 2a eine Ausgangsöffnung gebildet, deren Höhe auf die individuelle Höhe H des Stückgutes 2 einstellbar ist (s. auch Fig.1). Um die Führungsleiste 23 in der Führungsschiene 18 in einer bestimmten Höhenlage zu fixieren, sind im Querträger 27 Bohrungen 32 vorgesehen, die paarweise in Reihen übereinander angeordnet sind. Aus Herstellungsgründen sind zwei Reihen von Bohrungen 32 symmetrisch zur Mittellinie M angeordnet, wobei jeweils nur die unter der Mittellinie M angeordneten Bohrungen 32 Verwendung finden, und zwar je nachdem, ob die Führungsschiene 18 - die in entsprechender Weise symmetrisch zur Mittellinie M ausgebildet ist - in eine "linke" oder in eine "rechte" Seitenwand 3 bzw. 4 des Magazins 1 eingesetzt wird.

Die Bohrungen 32 dienen zur Aufnahme von zwei Stiften 33, die nebeneinander an einer federnden Zunge 34 der Führungsleiste 23 angeordnet sind; die Zunge 34 ist innerhalb einer Durchbrechung 35 an der Führungsleiste 23 angeformt, s. auch Fig.7. Die Zunge 34 weist an ihrem Ende einen nach außen abgewinkelten Fortsatz 36 auf, der zum händischen Lösen der formschlüssigen Verbindung zwischen den Stiften 33 und den Bohrungen 32 dient. Wie aus Fig.4 zu entnehmen ist, überschneiden sich die Bohrungen 32 in Längsrichtung der Führungsleiste 23, so daß ein relativ kleines Rastermaß von ca. 2,5 mm zur Verstellung der Führungsleiste 23 erzielbar ist. Ein abgewinkelter Endteil 37 der Führungsleiste 23 verläuft leicht schräg nach unten geneigt und definiert mit seiner Unterkante 38 die Höhe der Ausgangsöffnung für das unterste Stückgut 2a.

In Verlängerung der Führungsleiste 23 sind beim Übergang zum Endteil 37 drei nach unten gerichtete Borstenbündel 39 mit angeformt, die eine Art "elastischen Vorhang" für das unterste Stückgut 2a bilden und verhindern, daß das unterste Stückgut 2a von selbst aus dem Magazin 1 herausrutscht, wenn nur mehr wenige Stückgüter 2 im Magazin 1 enthalten sind.

In Fig.9 und 10 ist einer der Stege 5 im einzelnen dargestellt; er besteht z.B. aus glasfaserverstärktem Kunststoffmaterial, beispielsweise PA, und weist an seinen Flachseiten 40, 41 in regelmäßigen Abständen von ca. 4 mm V-förmige Kerben 42 als Sollbruchstellen auf, die quer zu seiner Längsrichtung verlaufen. An der einen Flachseite 41 sind zusätzlich zu den Kerben 42 quaderförmige Vertiefungen 43 vorgesehen, die paarweise und ebenfalls quer zur Längsrichtung des Steges 5 verlaufen und in regelmäßigem Abstand von ca. 4 mm angeordnet sind. Innerhalb der Hohlprofile 8 der Seitenwände 3, 4 sind zu den Vertiefungen 43 komplementäre Vorsprünge 44 (s. Fig.2 und 3) angeformt, so daß zwischen den Stegen 5 und den Seitenwänden 3, 4 eine formschlüssige Verbindung hergestellt werden kann, wobei zur Sicherung dieser Verbindung bzw. Fixierung Keile 45 vorgesehen sind, die oberhalb der Stege 5 in die Hohlprofile 8 eingetrieben werden (s. Fig.3, 4). Somit kann der Abstand zwischen den beiden Seitenwänden 3, 4 mit einem Rastermaß von ca. 4 mm auf die Breite B des Stückgutes 2 eingestellt werden, indem die Stege 5 einfach händisch durch Brechen abgelängt werden, was durch die Sprödigkeit des glasfaserverstärkten Kunststoffmaterials erleichtert wird.

Es hat sich auch als kostengünstig und zweckmäßig erwiesen, wenn die Herstellung des Steges 5 zusammen mit den zwei Keilen 45 einstückig erfolgt, wie in Fig.11 dargestellt, wobei die Keile 45 über Verbindungsstege 46 mit den Enden des Steges 5 verbunden sind und die Keile 45 durch Abbrechen dieser Verbindungsstege 46 vom Steg 5 entfernbar sind.

Um die oben erwähnte Teilung zufolge des Rastermaßes der Stege 5 von ca. 4 mm noch zu ergänzen, sind zusätzlich Gleitschienen 47 aus Kunststoffmaterial, vorzugsweise ABS, vorgesehen, die innerhalb der Seitenwände 3, 4 vor der Vorderseite 6 parallel zu den Führungsschienen 18 verlaufend angebracht und auf die gleiche Weise wie die Führungsschienen 18 befestigt sind, d.h. sie weisen ebenfalls drei Zapfen 19 auf, die in analoger Weise in Vertiefungen 21 in den Seitenwänden 3, 4 einschnappbar sind. Die Dicke der Gleitschienen 47 beträgt ca. 4 mm. Es bestehen somit die Möglichkeiten, entweder sowohl auf der "rechten" Seitenwand 4 als auch auf der "linken" Seitenwand 3, oder nur auf einer der beiden Seitenwände 3, 4, oder, auf keiner der Seitenwände 3, 4, jeweils eine Gleitschiene 47 anzubringen, wodurch eine zusätzliche Anpassung an die Breite B des Stückgutes 2 erfolgen kann.

Als weitere Option zur Anpassung des Magazins 1 an die Tiefe T des Stückgutes 2, insbesondere des untersten Stückgutes 2a, ist - wie aus den Fig.2 und 3 zu entnehmen ist - an der Rückseite 6 des Magazins 1 bzw. der Seitenwände 3, 4 ein Justierhebel 48 aus Kunststoffmaterial, z.B. PC, vorgesehen, der entweder im Bereich des Griffs 9 der rechten Seitenwand 4 bzw. eines Ansatzes 49 an der linken Seitenwand 3 auf einer Welle 50 einschnappbar aufgesetzt und um die Welle 50 schwenkbar gelagert ist. Zur Fixierung des Justierhebels 48 weist dieser einen quer abstehenden Arm 51 auf, der mit einer Zahnung 52 versehen ist, die in eine komplementäre Zahnung 53 im Griff 9 bzw. im Ansatz 49 eingreift. Die Teilung der Zahnung 52 bzw. 53 beträgt ca. 1,4 mm, wodurch eine zusätzliche Feineinstellung in Bezug auf die Tiefe T des Stückgutes 2 erfolgen kann.

In Fig.12 bezeichnet 54 ein Regal, in welchem fünf Magazine 1 jeweils an einer Profilschiene 12 um etwa 15° nach unten geneigt eingehängt gezeigt sind, wie an Hand der Fig.3 erläutert wurde. Die Magazine 1 weist hierbei vorzugsweise zwei verschiedene Größen hinsichtlich der Bauhöhe auf. Unterhalb der Magazine 1 sind ebenfalls schräg nach unten geneigte Führungsschienen 55 angebracht, in welchen jeweils ein Wagen 56 verschiebbar geführt ist, der einen Elektromagneten 57 trägt, dessen stabförmiger Kern 58 (s. auch Fig.3) nach oben ragt, um einen Mitnehmer für das jeweils unterste Stückgut 2a zu bilden. Im aktivierten Zustand des Elektromagneten 57 wird dessen Kern 58 nach oben bewegt, um dann - wenn der Wagen 56 in Richtung des Pfeiles A bewegt wird - durch den zwischen den unteren Leisten 16, 17 (s. Fig.3, 4) der beiden Seitenwände 3, 4 gebildeten Spalt hindurchzutreten und das unterste Stückgut 2a zur Ausgabeöffnung - welche durch die in den Seitenwänden 3, 4 angeordneten Führungsleisten 23 definiert ist - vorzuschieben, worauf das Stückgut 2a anschließend über eine Rutsche 59 auf ein Förderband 60 gelangt. Nach der Ausschiebung des untersten Stückgutes 2a wird der Elektromagnet 57 entregt und der Wagen 56 in Richtung des Pfeiles B zurückbewegt. Die Vor- und Rückwärtsbewegung des Wagens 56 wird z.B. mittels einer am Wagen 56 angelenkten Kurbelstange 61 bewerkstelligt, die mit einer Kurbelscheibe 62 gekuppelt ist, wobei die Kurbelscheibe 62 über einen Kettenantrieb 63 mit einem Getriebemotor 64 verbunden ist.

Oberhalb der Profilschienen 12 sind Leseeinrichtungen 65, z.B. Scanner, angebracht, die einen auf einer Karte aufgedruckten Bar-Code ablesen, wobei die Karte auf der Vorderseite 7 des Magazins 1 bzw. dessen Seitenwänden 3, 4 angebracht ist. Somit kann die Art und Anzahl des Stückgutes 2 im Magazin 1 identifiziert werden, und diese Daten werden anschließend an einen Zentralrechner (nicht gezeigt) weitergeleitet. Dadurch können die Magazine 1 an beliebigen freien Stellen in das Regal 54 eingesetzt werden.

## Patentansprüche

1. Wechselmagazin (1), das zum lösbaren Einsetzen in ein Speicherregal (54) ausgebildet ist und zwei über Stege (5) miteinander verbundene Seitenwände (3, 4) aufweist, zwischen welchen ein Aufnahmeraum für das übereinandergestapelte Stückgut (2) definiert ist, wobei die Seitenwände (3, 4) zur Abstützung des Stückgut-Stapels untere, nach innen abgewinkelte Endabschnitte (17) aufweisen, **dadurch gekennzeichnet, daß** der gegenseitige Abstand der Seitenwände (3, 4) mit Hilfe der Stege (5) an die Breite (B) des Stückgutes (2) anpaßbar ist, daß zumindest an einer Seitenwand (3, 4) zumindest eine parallel zu den Seitenwänden (3, 4) verlaufende, an den Stückgut-Stapel über dessen Höhe anlegbare Führungsschiene (18) in Richtung der Tiefe (T) des zwischen den Seitenwänden (3,4) für das Stückgut (2) definierten Aufnahmeraums versetzbar angeordnet ist, und daß in der Führungsschiene (18) eine Führungsleiste (23), die eine Ausgabeöffnung für das Stückgut (2) definiert, in Richtung der Höhe (H) des Aufnahmeraums für das Stückgut (2) versetzbar angeordnet ist, wobei durch diese versetzbare Anordnung der Führungsleiste (23) die Ausgabeöffnung für das Stückgut verstellbar ist.

2. Wechselmagazin nach Anspruch 1, **dadurch gekennzeichnet, daß** die Stege (5) zumindest mit einer Seitenwand (3, 4) lösbar verbunden sind.

3. Wechselmagazin nach Anspruch 1 oder 2, **dadurch gekennzeichnet, daß** die Stege (5) zur Erzielung unterschiedlicher Längen quer zu ihrer Längsrichtung Sollbruchstellen aufweisen.

4. Wechselmagazin nach einem der Ansprüche 1 bis 3, **dadurch gekennzeichnet, daß** die Stege (5) aus einem glasfaserverstärkten Kunststoffmaterial bestehen.

5. Wechselmagazin nach Anspruch 4, **dadurch gekennzeichnet, daß** die Stege an zumindest einer ihrer Flachseiten V-förmige Kerben (42) als Sollbruchstellen aufweisen.

6. Wechselmagazin nach einem der Ansprüche 1 bis 5, dadurch ge kennzeichnet, daß die Stege (5) Vertiefungen (43) aufweisen, welche mit korrespondierenden Vorsprüngen (44) an den Seitenwänden (3, 4) formschlüssig verbindbar sind.

7. Wechselmagazin nach Anspruch 6, **dadurch gekennzeichnet, daß** die Vorsprünge (44) innerhalb von Hohlprofilen (8) an den Seitenwänden (3, 4) ausgebildet sind, in welchen die Stege (5) einsetz- und fixierbar sind.

8. Wechselmagazin nach Anspruch 7, **dadurch gekennzeichnet, daß**, die Stege (5) im Hohlprofil (8) mittels eines Keiles (45) fixierbar sind.

9. Wechselmagazin nach einem der Ansprüche 1 bis 8, **dadurch gekennzeichnet, daß** die Führungsschiene (18) über Schnappverbindungen mit der (jeweiligen) Seitenwand (3, 4) verbunden ist.

10. Wechselmagazin nach Anspruch 9, **dadurch gekennzeichnet, daß** als Schnappverbindungen an der Führungsschiene (18) angebrachte Zapfen (19) vorgesehen sind, die in jeweils eine Vertiefung (20) mehrerer Reihen von korrespondierenden Vertiefungen (20) in der Seitenwand (3, 4) einschnappbar sind.

11. Wechselmagazin nach Anspruch 10, **dadurch gekennzeichnet, daß** die Vertiefungen (20) in Leisten (21) ausgebildet sind, welche in Durchbrechungen (22) der Seitenwand (3, 4) angeordnet sind.

12. Wechselmagazin nach Anspruch 10 oder 11, **dadurch gekennzeichnet, daß** die Zapfen (19) einen in Längsrichtung der Führungsschiene (18) verbreiterten Kopf (19a) aufweisen.

13. Wechselmagazin nach einem der Ansprüche 1 bis 12, **dadurch gekennzeichnet, daß** die Führungsleiste (23) innerhalb der Führungsschiene (18) in der jeweiligen Position formschlüssig gehalten ist.

14. Wechselmagazin nach Anspruch 13, **dadurch gekennzeichnet, daß** die Führungsschiene (18) im Querschnitt allgemein C-förmig ausgebildet ist und zwischen ihren Schenkeln (25, 26) einen Querträger (27) aufweist, an welchem die Führungsleiste (23) anliegt und welcher Bohrungen (32) aufweist, um einen oder mehrere Stift(e) (33) aufzunehmen, der bzw. die federnd an der Führungsleiste (23) angebracht ist bzw. sind.

15. Wechselmagazin nach Anspruch 14, **dadurch gekennzeichnet, daß** die Führungsleiste (23) eine Durchbrechung (35) aufweist, in welcher eine federnde Zunge (34) angeordnet ist, welche den oder die Stift(e) (33) trägt.

16. Wechselmagazin nach einem der Ansprüche 13 bis 15, **dadurch gekennzeichnet, daß** die Führungsleiste (23) an ihrem unteren Ende unter Bildung einer Einlaufschräge abgewinkelt ist.

17. Wechselmagazin nach einem der Ansprüche 13 bis 16, **dadurch gekennzeichnet, daß** am unteren Ende der Führungsleiste (23) Borstenbündel (39) angebracht sind.

18. Wechselmagazin nach einem der Ansprüche 1 bis 17, **dadurch gekennzeichnet, daß** an der Seitenwand (3, 4) eine parallel zur Führungsschiene (18) verlaufende Gleitschiene (47) im Bereich der Rückseite (6) des Magazins (1) lösbar an der Seitenwand (3, 4) angebracht ist.

19. Wechselmagazin nach einem der Ansprüche 1 bis 18, **dadurch gekennzeichnet, daß** an der Rückseite (6) des Magazins (1) ein Justierhebel (48) schwenkbar auf einer Welle (50) gelagert und in seiner Lage fixierbar ist.

20. Wechselmagazin nach einem der Ansprüche 1 bis 19, **dadurch gekennzeichnet, daß** an zumindest einer Seitenwand (3, 4) ein Griff (9) angebracht ist.

## Claims

1. An exchangeable magazine (1) designed for a releasable insertion in a storage shelf (54) and comprising two side walls (3, 4) interconnected via webs (5), a receiving space being defined therebetween for the superimposed items (2), the side walls (3, 4) including lower, inwardly angled end portions (17) for supporting the item stack, **characterized in that** the mutual distance of the side walls (3, 4) is adaptable to the width (B) of the items (2) by aid of the webs (5), that at least on one side wall (3, 4), at least one guide rail (18) extending in parallel to the side walls (3, 4) and capable of engaging the item stack over the height thereof is mounted to be displaceable in the direction of the depth (T) of the receiving space defined between the side walls (3, 4) for the items (2), and that a guide ledge (23) defining a discharge opening for the items (2) is arranged within the guide rail (18) so as to be displaceable in direction of the height (H) of the receiving space for the items (2), the discharge opening for the items being displaceable by this displaceable arrangement of the guide ledge (23).

2. An exchangeable magazine according to claim 1, **characterized in that** the webs (5) are releasably connected with at least one side wall (3, 4).

3. An exchangeable magazine according to claim 1 or 2, **characterized in that** the webs (5) have pre-determined breaking points transversely to their longitudinal direction so as to obtain different lengths thereof.

4. An exchangeable magazine according to any one of claims 1 to 3, **characterized in that** the webs (5) are made of glass-fiber-reinforced plastics material.

5. An exchangeable magazine according to claim 4, **characterized in that** the webs have V-shaped notches (42) as pre-determined breaking points on at least one flat side thereof.

6. An exchangeable magazine according to any one of claims 1 to 5, **characterized in that** the webs (5) have indentations (43) which can form a positive connection with corresponding projections (44) provided on the side walls (3, 4).

7. An exchangeable magazine according to claim 6, **characterized in that** the projections (44) are formed within hollow sections (8) at the side walls (3, 4) in which the webs (5) are insertable and fixable.

8. An exchangeable magazine according to claim 7, **characterized in that** the webs (5) are fixable in the hollow section (8) by means of a wedge (45).

9. An exchangeable magazine according to any one of claims 1 to 8, **characterized in that** the guide rail (18) is connected with the (respective) side wall (3, 4) via snap connections.

10. An exchangeable magazine according to claim 9, **characterized in that** pins (19) attached to the guide rail (18) are provided as snap connections, which are each capable of being snapped into a respective indentation (20) of several rows of corresponding indentations (20) provided in the side wall (3, 4).

11. An exchangeable magazine according to claim 10, **characterized in that** the indentations (20) are formed in ledges (21) which are arranged in holes (22) of the side wall (3, 4).

12. An exchangeable magazine according to claim 10 or 11, characterized in that the pins (19) comprise a head (19a) which is widened in the longitudinal direction of the guide rail (18).

13. An exchangeable magazine according to any one of claims 1 to 12, **characterized in that** the guide ledge (23) is held in its respective position within the guide rail (18) in positive connection.

14. An exchangeable magazine according to claim 13, chracterized in that the guide rail (18) is formed with a generally C-shaped cross-section and comprises a transverse member (27) between its legs (25, 26) which is abutted by the guide ledge (23) and which includes bores (32) to accommodate one or several pin(s) (33) resiliently attached to the guide ledge (23).

15. An exchangeable magazine according to claim 14, **characterized in that** the guide ledge (23) comprises a hole (35) in which a resilient tongue (34) is arranged which carries the pin(s) (33).

16. An exchangeable magazine according to any one of claims 13 to 15, **characterized in that** the guide ledge (23) is angled at its lower end, thereby forming an inclined ramp portion.

17. An exchangeable magazine according to any one of claims 13 to 16, **characterized in that** bristle bundles (39) are attached at the lower end of the guide ledge (23).

18. An exchangeable magazine according to any one of claims 1 to 17, **characterized in that** a slide rail (47) extending in parallel to the guide rail (18) is detachably mounted on the side wall (3, 4) in the region of the rear side (6) of the magazine (1).

19. An exchangeable magazine according to any one of claims 1 to 18, charaterized in that at the rear side (6) of the magazine (1), an adjustment lever (48) is pivotably mounted on a shaft (5) and fixable in its position.

20. An exchangeable magazine according to any one of claims 1 to 19, **characterized in that** a handle (9) is attached on at least one side wall (3, 4).

## Revendications

1. Magasin remplaçable (1), qui est agencé pour être inséré de façon amovible dans un rayonnage de stockage (54) et comporte deux parois latérales (3,4), qui sont reliées entre elles par l'intermédiaire de barrettes (5) et entre lesquelles est défini un espace de logement pour les articles (2) devant être empilés les uns sur les autres, les parois latérales (3,4) possédant les éléments inférieurs d'extrémité (17), coudés vers l'intérieur, pour supporter la pile d'articles, **caractérisé en ce que** la distance réciproque des parois latérales (3,4) est adaptable à l'aide des barrettes (5) à la largeur (B) des articles (2), de telle sorte qu'au moins un rail de guidage (18), qui est parallèle aux parois latérales (3,4) et peut s'appliquer contre la pile d'articles, sur sa hauteur, est disposé au moins contre une paroi latérale (3,4) de manière à être déplaçable dans le sens de la profondeur (T) de l'espace de logement défini entre les parois latérales (3,4) pour l'article (2), et qu'une barrette de guidage (23), qui définit une ouverture de sortie pour l'article (2), est disposée dans le rail de guidage (18) de manière à être déplaçable dans le sens de la hauteur (H) de l'espace de logement pour l'article (2), l'ouverture de sortie pour l'article étant réglable au moyen de cette disposition avec possibilité de déplacement de la barrette de guidage (23).

2. Magasin remplaçable selon la revendication 1, **caractérisé en ce que** les barrettes (5) sont reliées de façon amovible au moins à une paroi latérale (3,4).

3. Magasin remplaçable selon la revendication 1 ou 2, **caractérisé en ce que** les barrettes (5) possèdent des points de rupture de consigne, pour l'obtention de différentes longueurs transversalement par rapport à la direction longitudinale des barrettes.

4. Magasin remplaçable selon l'une des revendications 1 à 3, **caractérisé en ce que** les barrettes (5) sont réalisées en une matière plastique renforcée par des fibres de verre.

5. Magasin remplaçable selon la revendication 4, **caractérisé en ce que** les barrettes possèdent, sur au moins un de leurs côtés plats, des encoches en forme de V (42) en tant que points de rupture de consigne.

6. Magasin remplaçable selon les revendications 1 à 5, **caractérisé en ce que** les barrettes (5) comportent des renfoncements (43), qui peuvent être reliés, selon une liaison par formes complémentaires, à des parties saillantes correspondantes (44) présentes sur les parois latérales (3,4).

7. Magasin remplaçable selon la revendication 6, **caractérisé en ce que** les parties saillantes (44) sont formées à l'intérieur de profilés creux (8) situés sur les parois latérales (3,4) et dans lesquels les barrettes (5) peuvent être insérées et fixées.

8. Magasin remplaçable selon la revendication 7, **caractérisé en ce que** les barrettes (5) peuvent être fixées dans le profilé creux (8) à l'aide d'un coin (45).

9. Magasin remplaçable selon l'une des revendications 1 à 8, **caractérisé en ce que** le rail de guidage (18) est relié par l'intermédiaire de liaisons à encliquetage, à la paroi latérale (respective) (3,4).

10. Magasin remplaçable selon la revendication 9, **caractérisé en ce qu'**il est prévu comme liaisons à encliquetage des tétons (19), qui sont disposés sur le rail de guidage (18) et qui peuvent être encliquetés dans des renfoncements respectifs (20) de plusieurs rangées de renfoncements correspondants (20) formés dans la paroi latérale (3,4).

11. Magasin remplaçable selon la revendication 10, **caractérisé en ce que** les renfoncements (20) sont formés dans des barrettes (21), qui sont disposées dans des passages traversants (22) de la paroi latérale (3,4).

12. Magasin remplaçable selon la revendication 10 ou 11, **caractérisé en ce que** les tétons (19) possèdent une tête (19a), qui s'élargit dans la direction longitudinale du rail de guidage (18).

13. Magasin remplaçable selon l'une des revendications 1 à 12, **caractérisé en ce que** la barrette de guidage (23) est retenue selon une liaison par formes complémentaires à l'intérieur du rail de guidage (18), dans la position respective.

14. Magasin remplaçable selon la revendication 13, **caractérisé en ce que** le rail de guidage (18) est agencé avec une forme générale de C en coupe transversale et comporte, entre ses branches (25,26), un support transversal (27), contre lequel s'applique la barrette de guidage (23) et qui possède les perçages (32) servant à loger une ou plusieurs tiges (33), qui sont montées élastiquement sur la barrette de guidage (23).

15. Magasin remplaçable selon la revendication 14, **caractérisé en ce que** la barrette de guidage (23) comporte un passage (35), dans lequel est disposée une languette élastique (34), qui porte la ou les tiges (33).

16. Magasin remplaçable selon l'une des revendications 13 à 15, **caractérisé en ce que** la barrette de guidage (23) est coudée au niveau de son extrémité inférieure en formant un biseau d'entrée.

17. Magasin remplaçable selon l'une des revendications 13 à 16, **caractérisé en ce qu'**une touffe de poils (39) sont disposés au niveau de l'extrémité inférieure de la barrette de guidage (23).

18. Magasin remplaçable selon l'une des revendications 1 à 17, **caractérisé en ce qu'**une glissière (47), qui s'étend parallèlement au rail de guidage (18), est montée de façon amovible sur la paroi latérale (3,4), dans la zone du côté arrière (6) du magasin (1).

19. Magasin remplaçable selon l'une des revendications 1 à 18, **caractérisé en ce que** sur le côté arrière (6) du magasin (1), un levier d'ajustement (48) est monté de manière à pouvoir pivoter sur un arbre (50) et peut être fixé en position.

20. Magasin remplaçable selon l'une des revendications 1 à 19, **caractérisé en ce qu'**une poignée (9) est montée sur au moins une paroi latérale (3,4).
